# EUROPÄISCHE PATENTSCHRIFT

(11) **EP 2 932 478 B1**
(45) Veröffentlichungstag und Bekanntmachung des Hinweises auf die Patenterteilung: **17.04.2019**
(21) Anmeldenummer: 13802889.9
(22) Anmeldetag: 11.12.2013
(51) Int. Cl.: G07D 7/00, G07D 7/12

(54) **VERFAHREN ZUR BEREITSTELLUNG VON MESSDATEN EINER VORRICHTUNG ZUR BEARBEITUNG VON WERTDOKUMENTEN UND WERTDOKUMENTBEARBEITUNGSVORRICHTUNG**
METHOD FOR PROVIDING MEASUREMENT DATA FROM A DEVICE FOR PROCESSING VALUE DOCUMENTS AND VALUE DOCUMENT PROCESSING DEVICE
PROCÉDÉ DE FOURNITURE DE DONNÉES DE MESURE D'UN DISPOSITIF POUR TRAITER DES DOCUMENTS DE VALEUR ET DISPOSITIF DE TRAITEMENT DE DOCUMENTS DE VALEUR

(30) Priorität: 13.12.2012 DE 102012024390
(43) Veröffentlichungstag der Anmeldung: 21.10.2015
(73) Patentinhaber: Giesecke+Devrient Currency Technology GmbH, 81677 München (DE)
(72) Erfinder: HECHT, Matthias, 85521 Neubiberg (DE); VRANA, Klaus, 85375 Neufahrn (DE); FÖRSTER, Karl-Dieter, 82041 Deisenhofen (DE)
(86) Internationale Anmeldenummer: PCT/EP2013/003744
(87) Internationale Veröffentlichungsnummer: WO 2014/090402

(56) Entgegenhaltungen:
- EP-A1- 1 418 549
- EP-A2- 0 280 436
- DE-A1- 19 618 541
- US-A- 4 040 027

## Beschreibung

Die vorliegende Erfindung betrifft ein Verfahren zur Bereitstellung von Messdaten einer Vorrichtung zur Bearbeitung von Wertdokumenten vorgegebener unterschiedlicher Bearbeitungstypen und eine Wertdokumentbearbeitungsvorrichtung zur Durchführung des Verfahrens. Vorzugsweise können die bereitgestellten Messdaten zur Anpassung von Parametern der Vorrichtung verwendbar sein.

Unter Wertdokumenten werden dabei blattförmige Gegenstände verstanden, die beispielsweise einen monetären Wert repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente sind Gutscheine, Schecks und insbesondere Banknoten.

Wertdokumentbearbeitungsvorrichtungen, insbesondere Banknotenbearbeitungsvorrichtungen, klassifizieren Wertdokumente, insbesondere Banknoten, hinsichtlich des Wertdokumenttyps, bei Banknoten der Währung und/oder des Werts, und/oder der Echtheit und/oder der Qualität und/oder der Orientierung. Unter der Orientierung eines Wertdokuments wird im Folgenden bei einem rechteckigen Wertdokument eine der vier möglichen Lagen verstanden, die durch Drehungen des Wertdokuments um seine Längs- und Querachse um jeweils 180° erhalten werden können. Unter der Qualität eines Wertdokuments wird insbesondere dessen Zustand verstanden; der Zustand kann bei Banknoten insbesondere durch Klassen wie "umlauffähig" und/oder "nicht umlauffähig" und/oder "beschädigt" oder "beschädigt" in Verbindung mit der Art der Beschädigung gegeben sein. In Abhängigkeit von der Klassifizierung können die Wertdokumente dann beispielsweise sortiert und gegebenenfalls in entsprechenden Ausgabebereichen abgelegt werden. Dies sei am Beispiel von Wertdokumenten in Form von Banknoten erläutert.

Die Klassifizierung erfolgt aufgrund verschiedener physikalischer Eigenschaften der individuellen, d. h. jeweils bearbeiteten, Banknote. Beispiele für solche physikalischen Eigenschaften sind optische Eigenschaften, insbesondere Farbeigenschaften, magnetische Eigenschaften oder Ultraschalleigenschaften.

Bei der Bearbeitung von Banknoten in Banknotenbearbeitungsvorrichtungen werden mittels Sensoren aufgrund verschiedener physikalischer Eigenschaften der individuellen, d. h. jeweils bearbeiteten, Banknote Messdaten erzeugt, die für die Klassifizierung verwendet werden. Unter Messdaten werden im Folgenden allgemein von einem Sensor gebildete Rohdaten verstanden, die, bis auf Bearbeitungsvorgängen im Sensor und/oder Korrekturen, insbesondere auch in Bezug auf Kalibrierung, Beseitigung von Rausch- oder Hintergrundanteilen, unverarbeitet sind. Zusätzlich können die Messdaten auch in Echtzeit aus den Messdaten berechnete Eigenschaften der Banknoten umfassen, beispielsweise Mittelwerte oder andere statistische Eigenschaften wenigstens eines Teils der Messdaten.

Die von den Sensoren gelieferten Messdaten werden in einer angeschlossenen Auswerteeinrichtung ausgewertet. Bei dieser Auswertung werden Banknotenmerkmale, die den Banknotentyp, die Echtheit und die Qualität der Banknote charakterisieren, durch geeignete Auswerteverfahren bestimmt. In Abhängigkeit von den bestimmten Banknotenmerkmalen wird dann von der Auswerteeinrichtung ein Klassifizierungsergebnis berechnet, das in der Folge bestimmt, in welchem Ausgabefach der Banknotenbearbeitungsvorrichtung die Banknote abgelegt werden soll.

Die Auswerteverfahren und die Ermittlung des Klassifizierungsergebnisses müssen an den Typ der zu verarbeitenden Banknoten und auch an die Anforderungen der Betreiber von Banknotenbearbeitungsvorrichtungen angepasst werden. Dazu ist die Auswerteeinrichtung, vorzugsweise wenigstens ein darin ablaufendes Auswerteprogramm, parametrierbar, d. h. es sind Klassifizierungsparameter vorhanden, deren Werte vorgebbar sind und die bei der Auswertung und Klassifizierung bzw. der Ermittlung des Klassifizierungsergebnisses verwendet werden; diese Anpassung der Klassifizierungsparameterwerte, auch als Anpassung der Klassifizierungsparameter bezeichnet, wird im Folgenden als Adaption bezeichnet.

Um passende Klassifizierungsparameter zu ermitteln, werden im Allgemeinen die Messdaten entsprechender geeignet vorgegebener Banknoten zur Klassifizierungsparameteranpassung verwendet. Genauer werden in einem ersten Schritt bei einer Messdatenaufnahme für die vorgegebenen Banknoten mit der Banknotenbearbeitungsvorrichtung entsprechende Messdaten erfasst und abgespeichert. Diese Messdaten werden dann in einem zweiten Schritt zur Ermittlung der Klassifizierungsparameterwerte benutzt.

Um eine gute Parametrisierung zu ermöglichen, werden häufig bei der Messdatenaufnahme Messdaten für eine größere Anzahl von Banknoten erfasst, die sich in verschiedenen Bearbeitungseigenschaften unterscheiden, beispielsweise deren Typ, insbesondere Währung und/oder Wert, deren Qualität bzw. Zustand, deren Echtheit und/oder der Orientierung, in der sie in der Wertdokumentbearbeitungsvorrichtung an den Sensoren vorbeitransportiert werden.

Für die anschließende Parameterermittlung ist es dann erforderlich, dass auf die Messdaten für die verschiedenen Bearbeitungseigenschaften gezielt zugegriffen werden kann. Die Messdaten müssen also in entsprechend unterschiedliche Datenstrukturen, z. B. Dateien, gespeichert werden. Außerdem muss zusätzlich die Information verfügbar sein, für welche Banknote die Messdaten ermittelt wurden.

Die Messdatenerfassung kann jedoch bei größeren Anzahlen von Banknoten dadurch erschwert werden, dass beispielsweise moderne optische Sensoren Bilder mit einer hohen Auflösung erfassen, zu deren Übertragung und Speicherung große Datenübertragungsgeschwindigkeiten notwendig sind. Solche Datenübertragungsgeschwindigkeiten sind aber während des normalen Betriebs nur zwischen den Sensoren und der Auswerteeinrichtung erforderlich.

In DE 196185 41 A1 ist eine Vorrichtung zur Prüfung von Blattgut beschrieben, bei der in wenigstens einer Sensoreinheit ein Speicher vorgesehen ist, in dem Datensätze mehrerer Blätter verwaltet werden können. In jedem Datensatz sind Bereiche vorgesehen, in denen Daten von wenigstens einer anderen Sensoreinheit gespeichert werden können. Vorzugsweise weist die Sensoreinheit eine Maßeinheit und eine Auswerteeinheit auf, wobei der Speicher der Sensoreinheit in der Auswerteeinheit vorgesehen wird.

Der vorliegenden Erfindung liegt daher die Aufgabe zugrunde, ein Verfahren zur Bereitstellung von Messdaten einer Wertdokumentbearbeitungsvorrichtung zur Bearbeitung von Wertdokumenten anzugeben, das auch für größere Anzahlen von Wertdokumenten und/oder hochauflösende optische Sensoren nur einfache Mittel zur Durchführung erfordert, und Mittel zur Durchführung des Verfahrens bereitzustellen. Vorzugsweise sind die Messdaten zur Anpassung von Parametern der Wertdokumentbearbeitungseinrichtung verwendbar.

Die Aufgabe wird gelöst durch ein Verfahren zum Bereitstellen von Messdaten einer Wertdokumentbearbeitungsvorrichtung zur Bearbeitung von Wertdokumenten, die eine Zuführvorrichtung zum Zuführen einzelner Wertdokumente und eine Sensoreinrichtung mit einem Zwischenspeicher, die einen oder mehrere Sensoren zum Erfassen wenigstens einer physikalischen Eigenschaft von zugeführten einzelnen Wertdokumenten aufweist und zum Speichern von mittels des einen Sensors oder der mehreren Sensoren erzeugten Messdaten für die einzelnen Wertdokumente in dem Zwischenspeicher in Echtzeit ausgebildet ist, aufweist; bei dem Verfahren werden mittels der Zuführeinrichtung einzelne Wertdokumente zugeführt und in Echtzeit mittels der Sensoreinrichtung für die Wertdokumente Messdaten erfasst und in dem Zwischenspeicher gespeichert, wobei während des Zuführens einzelner Wertdokumente und/oder des Erfassens von Messdaten ein Kriterium dafür überwacht wird, dass die momentane Auslastung des Zwischenspeichers eine vorgegebene Grenzauslastung überschreitet. Bei dem Verfahren wird weiter, wenn das Kriterium erfüllt ist, das Zuführen von Wertdokumenten unterbrochen und Messdaten aus dem Zwischenspeicher werden in einem permanenten Speicher dauerhaft gespeichert; bei dem Verfahren wird während des dauerhaften Speicherns und/oder nach dem dauerhaften Speichern der Messdaten in dem permanenten Speicher der Zwischenspeicher wieder freigegeben und nach Freigabe des Zwischenspeichers werden das Zuführen einzelner Wertdokumente und das Erfassen und Speichern von Messdaten für die zugeführten Wertdokumente in dem Zwischenspeicher wieder aufgenommen.

Vorzugsweise wird nach dem Unterbrechen des Zuführens und vor dem dauerhaften Speichern der Messdaten auch das Erfassen und/oder Speichern von Messdaten unterbrochen.

Die Aufgabe wird weiter gelöst durch eine Vorrichtung zur Bearbeitung von Wertdokumenten mit einer Zuführeinrichtung zum Zuführen von einzelnen Wertdokumenten, einer Aufnahmeeinrichtung zur Aufnahme bearbeiteter Wertdokumente, einer Transporteinrichtung zum Transportieren von einzelnen Wertdokumenten von der Zuführeinrichtung entlang eines Transportpfades zu der Aufnahmeeinrichtung und einer Sensoreinrichtung mit einem Zwischenspeicher, die einen oder mehrere Sensoren zum Erfassen jeweils wenigstens einer physikalischen Eigenschaft von zugeführten, entlang des Transportpfades transportierten einzelnen Wertdokumenten aufweist und zum Speichern von mittels des einen Sensors oder der mehreren Sensoren Messdaten für die Wertdokumente in dem Zwischenspeicher in Echtzeit ausgebildet ist Dabei ist die Sensoreinrichtung in eine Messbetriebsart, in der mittels der eine oder mehreren Sensoren in Echtzeit Messdaten für einzelne Wertdokumente erfasst und in dem Zwischenspeicher gespeichert werden und ein Kriterium dafür überwacht wird, dass die momentane Auslastung des Zwischenspeichers eine vorgegebene Grenzauslastung überschreitet, und eine Ruhebetriebsart, in der keine Messdaten gespeichert werden, versetzbar. Weiter umfasst die Wertdokumentbearbeitungsvorrichtung einen permanenten Speicher zum dauerhaften Speichern von Messdaten und/oder eine Schnittstelle für einen externen permanenten Speicher zum dauerhaften Speichern von Messdaten. Die Vorrichtung ist ferner dazu ausgebildet, wenn die Sensoreinrichtung in der Messbetriebsart ist, wenn das Kriterium erfüllt ist,die Zuführeinrichtung so anzusteuern, dass diese keine weiteren einzelnen Wertdokumente zuführt, die Sensoreinrichtung in die Ruhebetriebsart zu versetzen und die Messdaten aus dem Zwischenspeicher in dem permanenten Speicher bzw. externen permanenten Speicher dauerhaft zu speichern, und während des Speicherns oder nach dem Speichern den Zwischenspeicher wieder freizugeben und nach dem Freigeben des Zwischenspeichers die Zuführeinrichtung so anzusteuern, dass diese das Zuführen einzelner Wertdokumente wiederaufnimmt, und die Sensoreinrichtung in die Messbetriebsart zu versetzen.

Zum Zuführen der Wertdokumente dient die Zuführeinrichtung, die insbesondere einen Vereinzeler umfassen kann, der Wertdokumente eines Stapels von Wertdokumenten vereinzelt und der Transporteinrichtung zuführt, so dass diese als einzelne Wertdokumente nacheinander weitertransportiert werden können.

Es ist nun vorgesehen, dass in Echtzeit, d. h. während des Zuführens von Wertdokumenten wenigstens eine physikalische Eigenschaft der vereinzelten bzw. einzelnen Wertdokumente erfasst wird. Hierzu verfügt die Sensoreinrichtung über eine oder mehrere bzw. wenigstens einen entsprechenden Sensor an dem Transportpfad. Der eine oder die mehreren Sensoren erzeugen bei der Erfassung Sensorsignale, die die physikalische Eigenschaft wenigstens indirekt wiedergeben und aus denen die Sensoreinrichtung die Messdaten erzeugt. Das Erzeugen kann in den Sensoren oder mittels einer anderen Einrichtung der Sensoreinrichtung in Echtzeit erfolgen.

Die Messdaten werden nun in Echtzeit, vorzugsweise im Takt des Zuführens einzelner Wertdokumente in dem Zwischenspeicher gespeichert, der dazu über hinreichend schnelle Datenverbindungen zu dem oder den Sensoren oder einer die Sensorsignale verarbeitenden Einrichtung verfügt. Der Zwischenspeicher kann insbesondere als flüchtiger Speicher ausgelegt sein.

Um einen Überlauf des Zwischenspeichers zu vermeiden, wird nun während des Zuführens einzelner Wertdokumente und/oder des Erfassens von Messdaten das Kriterium dafür überwacht, dass die momentane Auslastung des Zwischenspeichers eine vorgegebene Grenzauslastung überschreitet, um zu erkennen, wann der Zwischenspeicher bei unverändertem Betrieb überlaufen würde. Die Auslastung kann als Anteil des momentan belegten Speichers an dem maximal für die Speicherung der Messdaten zur Verfügung stehenden Speicher oder auch absolut angegeben sein. Die Grenzauslastung ist dann entsprechend vorzugeben. Das Kriterium kann vorzugsweise einen Vergleich der aktuellen Auslastung des durch Messdaten belegten Zwischenspeichers mit der vorgegebenen Grenzauslastung umfassen. Es ist jedoch auch möglich, dass das Kriterium nur die Anzahl der seit dem letzten Beginn der Vereinzelung vereinzelten und/oder erfassten Wertdokumente und eine vorgegebene Höchstzahl umfasst. Diese Art von Kriterium ist besonders vorteilhaft, wenn zu erwarten ist, dass für alle vorgegebenen Wertdokumente Messdaten mit wenigstens ungefähr ähnlichem Speicherplatzbedarf anfallen und in dem Zwischenspeicher gespeichert werden müssen.

Wenn das Kriterium erfüllt ist, beispielsweise in Abhängigkeit von dem Vergleich, vorzugsweise wenn erkannt wird, dass die Grenzauslastung überschritten wird, wird das Zuführen von Wertdokumenten unterbrochen, was durch direkte oder indirekte Ansteuerung der Zuführeinrichtung erfolgen kann. Weiter werden die Messdaten aus dem Zwischenspeicher in den permanenten Speicher gespeichert. Unter einer permanenten Speicherung wird dabei eine Speicherung verstanden, die für einen Zeitraum besteht der wesentlich länger ist als der Zeitraum, der zum Erfassen von Messdaten für den gesamten Stapel von Wertdokumenten, und/oder auch bei Abschalten der Wertdokumentbearbeitungsvorrichtung weiter besteht. Der permanente Speicher kann insbesondere ein Massenspeicher wie beispielsweise eine Festplatte sein.

Während oder nach dem Speichern der Messdaten aus dem Zwischenspeicher in dem permanenten Speicher wird der Zwischenspeicher wieder freigegeben und steht damit zur Speicherung von Messdaten für in der Folge zu erfassende Daten von weiteren einzelnen Wertdokumenten bereit. Daher wird dann das Zuführen von Wertdokumenten und das Erfassen der wenigstens einen physikalischen Eigenschaft und damit das Erzeugen und Speichern von Messdaten in dem Zwischenspeicher wieder aufgenommen.

Durch dieses Vorgehen ist es möglich, eine kontinuierliche Datenübertragung aller Messdaten zu dem permanenten Speicher zu gewährleisten, auch wenn die Geschwindigkeit des Datentransports von dem Zwischenspeicher zu dem permanenten Speicher wesentlich geringer ist als die des Datentransports von den Sensoren zu dem Zwischenspeicher. Durch die automatischen Unterbrechungen der Zuführung einzelner Wertdokumente ist eine quasi-kontinuierliche Datenaufzeichnung sehr großer Messdatenmengen möglich.

Der permanente Speicher kann gemäß einer Ausführungsform Teil der Wertdokumentbearbeitungsvorrichtung sein. Diese kann dann insbesondere noch eine einfache Datenverarbeitungseinrichtung, beispielsweise einen Industrie-PC aufweisen, die die Daten aus dem Zwischenspeicher holt oder empfängt und auf bzw. in dem permanenten Speicher speichert.

Alternativ oder zusätzlich ist es aber auch möglich, dass die Wertdokumentbearbeitungseinrichtung eine Schnittstelle für die Datenübertragung zu dem permanenten Speicher aufweist und der permanente Speicher von der Wertdokumentbearbeitungsvorrichtung abgesetzt ist. Bei der Schnittstelle kann es sich um eine Schnittstelle für ein externes Speichermedium, beispielsweise eine USB- oder Firewire- Schnittstelle, oder eine Netzwerkschnittstelle, beispielsweise in LAN-Karte oder ähnliches, handeln. Auch in diesem Fall kann die Vorrichtung noch eine einfache Datenverarbeitungseinrichtung, beispielsweise einen Industrie-PC aufweisen, die die Daten aus dem Zwischenspeicher holt oder empfängt und über die Datenschnittstelle an den über diese verbundenen externen permanenten Speicher überträgt.

Bei der Vorrichtung kann die Sensoreinrichtung in wenigstens zwei verschiedene Betriebsarten versetzt werden. In der Ruhebetriebsart werden wenigstens keine Messdaten in dem Zwischenspeicher gespeichert, vorzugsweise sind auch die Erfassung der wenigstens einen physikalischen Eigenschaft und die Erzeugung der Messdaten abgeschaltet. Bei dem Verfahren wird vorzugsweise nach dem Unterbrechen des Zuführens und vor dem dauerhaften Speichern der Messdaten auch das Erfassen und/oder Speichern von Messdaten unterbrochen. In der Messbetriebsart dagegen werden Messdaten für einzelne Wertdokumente erfasst bzw. vorzugsweise aus Sensorsignalen der Sensoren erzeugt und in dem Zwischenspeicher gespeichert und die momentane Auslastung des Zwischenspeichers wird mit einer vorgegebenen Grenzauslastung verglichen. Das Umschalten in die Messbetriebsart hat also zur Folge, dass Messdaten in Echtzeit erfasst werden können.

Weiter ist es bei dem Verfahren bevorzugt, dass nach dem Unterbrechen des Zuführens geprüft wird, ob sich kein einzelnes Wertdokument entlang des Transportpfades mehr zwischen der Zuführeinrichtung und der Sensoreinrichtung befindet, und das Unterbrechen des Erfassens und Speicherns der Messdaten erst erfolgt, wenn sich kein zugeführtes Wertdokument mehr zwischen der Zuführeinrichtung und der Sensoreinrichtung befindet. Die Vorrichtung kann dann zu diesem Zweck ausgebildet sein.

Vorzugsweise weist die Vorrichtung eine Maschinensteuerung zur Steuerung der Zuführeinrichtung und der Transporteinrichtung in Echtzeit aufweist. Die Sensoreinrichtung umfasst dann vorzugsweise eine Auswerteeinrichtung, die die Messdaten auswertet und in Abhängigkeit von dem Ergebnis des Auswertens Steuersignale an die Maschinensteuerung sendet; die Sensoreinrichtung, vorzugsweise die Auswerteeinrichtung kann dann zum Unterbrechen des Zuführens der Wertdokumente mit einem Unterbrechungssignal die Maschinensteuerung ansteuern, die dann die Zuführeinrichtung ansteuert, so dass keine Wertdokumente mehr zugeführt werden. Diese Ausführungsform erlaubt eine besonders hohe Verarbeitungsgeschwindigkeit, da sowohl die Sensoreinrichtung als auch die Maschinensteuerung zum Echtzeitbetrieb ausgelegt sind.

In diesem Fall kann die Maschinensteuerung nach Empfang des Unterbrechungssignals vorzugsweise prüfen, ob sich kein einzelnes Wertdokument entlang des Transportpfades zwischen der Zuführeinrichtung und der Sensoreinrichtung mehr befindet, und vorzugsweise, das Prüfen ergeben hat, dass sich kein einzelnes Wertdokument mehr entlang des Transportpfades zwischen der Zuführeinrichtung und der Sensoreinrichtung befindet, an die Sensoreinrichtung, ein Signal abgibt, auf das hin die Sensoreinrichtung in die Ruhebetriebsart versetzt wird. Auf diese Weise kann weitgehend sichergestellt werden, dass Messdaten für alle einzeln zugeführten Wertdokumente erhalten werden.

Die Erfindung wird im Folgenden noch weiter beispielhaft an Hand der Zeichnungen erläutert. Es zeigen:
- Fig. 1: eine schematische Ansicht einer Wertdokumentsortiervorrichtung, und
- Fig. 2: eine schematische Ansicht einer weiteren Wertdokumentsortiervorrichtung.

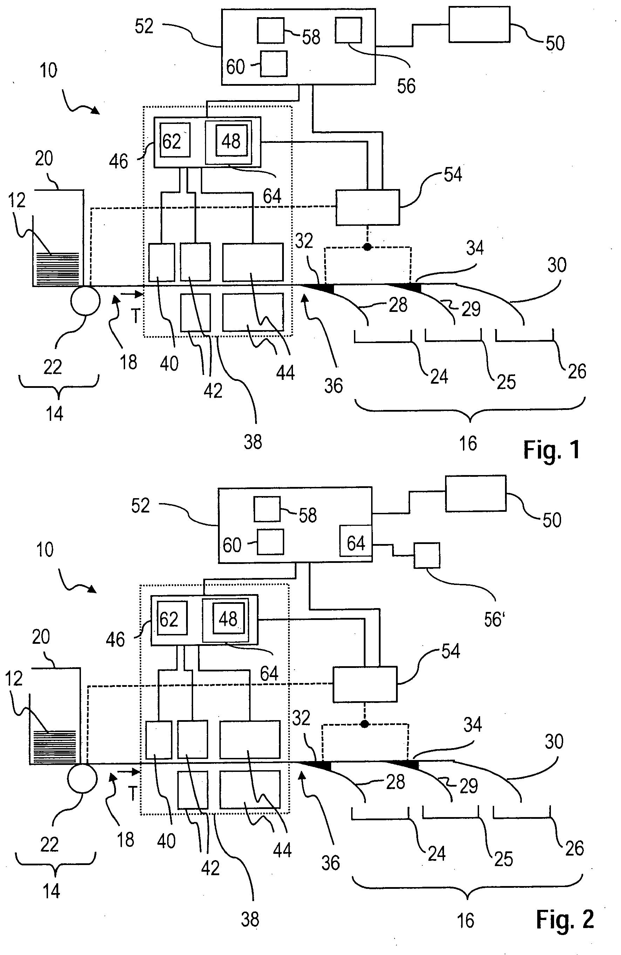

Eine Wertdokumentbearbeitungsvorrichtung 10 in Fig. 1, im Beispiel eine Vorrichtung zur Bearbeitung von Wertdokumenten 12 in Form von Banknoten, ist zur Sortierung von Wertdokumenten in Abhängigkeit von der Erkennung der Echtheit und des Zustands von bearbeiteten Wertdokumenten ausgebildet. Die im Folgenden beschriebenen Komponenten der Vorrichtung sind in einem nicht gezeigten Gehäuse der Vorrichtung angeordnet oder an diesem gehalten, soweit sie nicht als extern bezeichnet sind.

Die Vorrichtung verfügt über eine Zuführeinrichtung 14 zur Zuführung von Wertdokumenten, eine Ausgabeeinrichtung 16 zur Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfasst im Beispiel ein Eingabefach 20 für einen Wertdokumentstapel und einen Vereinzeler 22 zum Vereinzeln von Wertdokumenten des Wertdokumentstapels in dem Eingabefach 20 und zum Zuführen der vereinzelten bzw. einzelnen Wertdokumente zu der Transporteinrichtung 18.

Die Ausgabeeinrichtung 16 umfasst im Beispiel drei Ausgabeabschnitte 24, 25 und 26, in die bearbeitete Wertdokumente sortiert nach dem Ergebnis der Bearbeitung sortiert werden können. Im Beispiel umfasst jeder der Abschnitte ein Stapelfach und ein nicht gezeigtes Stapelrad, mittels dessen zugeführte Wertdokumente in dem jeweiligen Stapelfach abgelegt werden können.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzeler 22, und der in Transportrichtung ersten Weiche 32 nach dem Vereinzeler 22 sind Sensoren einer im Folgenden noch genauer beschriebenen Sensoreinrichtung 38 angeordnet, die während des Vorbeitransports von Wertdokumenten physikalische Eigenschaften der Wertdokumente misst und die Ergebnisse des Messens wiedergebende Sensorsignale bildet. In diesem Beispiel verfügt die Sensoreinrichtung 38 über drei Sensoren, nämlich einen optischen Remissionssensor 40, der ein Remissionsfarbbild und ein Remissions-IR-Bild des Wertdokuments erfasst, einen optischen Transmissionssensor 42, der ein Transmissionsfarbbild und eine Transmissions-IR-Bild des Wertdokuments erfasst, und einen Transmissionsultraschallsensor 44, der ortsaufgelöst Ultraschalltransmissionseigenschaften des Wertdokuments erfasst bzw. misst und nur im Folgenden der Einfachheit halber nur als Ultraschallsensor bezeichnet wird. Als physikalische Eigenschaften werden somit die Remission und Transmission in den genannten Wellenlängenbereichen und Ultraschalltransmission ortsaufgelöst erfasst. Die von den Sensoren gebildeten Sensorsignale entsprechen Messergebnisse bzw. Rohdaten der Sensoren, die je nach Sensor bereits einer Korrektur, beispielsweise in Abhängigkeit von Kalibrierdaten und/ oder Rauscheigenschaften, unterzogen worden sein können.

Die Sensoreinrichtung 38 verfügt weiter über eine über Datenverbindungen mit den Sensoren verbundene Messdatenauswerteeinrichtung 46 und einen Zwischenspeicher 48, der in diesem Ausführungsbeispiel durch einen Teil eines Hauptspeichers der Messdatenauswerteeinrichtung 46 gebildet ist in anderen Ausführungsbeispielen aber auch durch wenigstens ein anderes Speicherelement gebildet sein kann. Die Sensoreinrichtung 38 und insbesondere auch die Messdatenauswerteeinrichtung 46 sowie der Zwischenspeicher 48 sind zur Erfassung und Auswertung der Sensorsignale bzw. Messergebnisse der Sensoren in Echtzeit ausgebildet.

Zur Anzeige von Bedienungsdaten verfügt die Wertdokumentbearbeitungsvorrichtung 10 über eine Anzeigeeinrichtung 50, die im Beispiel durch eine berührungsempfindliche Anzeigeeinrichtung ("touch screen") realisiert ist. Die Anzeigeeinrichtung 50 dient daher als Ein-/ Ausgabeeinrichtung der Vorrichtung.

Die Wertdokumentbearbeitungsmaschine verfügt über mehrere Datenverarbeitungseinrichtungen: einen Maschinenrechner 52, eine Maschinensteuereinrichtung 54 zur Echtzeitsteuerung von Komponenten der Wertdokumentbearbeitungsvorrichtung 10 und die in der Sensoreinrichtung 38 vorgesehene mit den Sensoren 40, 42 und 44 über schnelle Datenverbindungen verbundene Messdatenauswerteeinrichtung 46.

Der Maschinenrechner 52 dient zur Gesamtsteuerung der Wertdokumentbearbeitungsvorrichtung 10 und insbesondere der Maschinensteuerung 54 und der Messdatenauswerteeinrichtung 46. Er ist mit der Ein-/Ausgabeeinrichtung in Form der berührungsempfindlichen Anzeigeeinrichtung 50 über eine Signal- bzw. Datenverbindung verbunden, mittels derer er Steuerdaten eines Benutzers einlesen und Informationen, insbesondere Bedien- und/oder Betriebsdaten, an den Benutzer ausgeben kann. Weiter weist der Maschinenrechner 52 in diesem Ausführungsbeispiel einen permanenten Speicher 56 in Form eines Massenspeichers, vorzugsweise einer Festplatte, zur Speicherung von Daten, insbesondere Messdaten, der Sensoreinrichtung 38 auf. Der Maschinenrechner 52 ist über Datenverbindungen, beispielsweise Ethernet-Netzwerkverbindungen mit TCP-Protokoll, mit der Maschinensteuereinrichtung 54 und der Sensoreinrichtung 38, in diesem Beispiel der Messdatenauswerteeinrichtung 46, verbunden. Der Maschinenrechner 52 ist in diesem Ausführungsbeispiel ein Industrie-PC mit entsprechenden Datenschnittstellen, einem Prozessor 58 und einem Speicher 60.

Die Messdatenauswerteeinrichtung 46 dient zur Verarbeitung der mittels der Sensoren 40, 42 und 44 erzeugten Messdaten in Echtzeit und insbesondere zur Auswertung der Messdaten und Klassifizierung eines Wertdokuments unter Verwendung der für das jeweilige Wertdokument erzeugten Messdaten. Bei der Klassifizierung wird dem Wertdokument, für das die Messdaten erfasst wurden, eine von mehreren Klassen zugeordnet und ein entsprechendes, die Klasse bezeichnendes Sortiersignal gebildet und der Maschinensteuerung 54 zugeführt. Als Klassen können, je nach Betriebsart der Wertdokumentbearbeitungsvorrichtung 10 beispielsweise Klassen für als echt und umlauffähig erkannte Wertdokumente, für als echt, aber nicht mehr umlauffähig erkannte und für nicht als echt erkannte Wertdokumente vorgesehen sein. Die Messdatenauswerteeinrichtung 46 verfügt dazu insbesondere neben in den Figuren nicht gezeigten Datenschnittstellen für die Sensoren über einen Prozessor 62 und einen mit dem Prozessor 62 verbundenen Speicher 64, in dem wenigstens ein Computerprogramm mit Programmcode gespeichert ist, bei dessen Ausführung der Prozessor 62 die genannten Funktionen der Messdatenauswerteeinrichtung 46 in der jeweiligen Betriebsart ausführt.

Die Sensoreinrichtung 38 kann in wenigstens drei verschiedenen Betriebsarten betrieben werden. In der Arbeitsbetriebsart werden von den Sensoren 40, 42 und 44 Messdaten erfasst und von der Messdatenauswerteeinrichtung wie beschrieben ausgewertet. Diese Betriebsart wird im Folgenden nicht weiter beschrieben. In der Messbetriebsart erfassen die Sensoren 40, 42 und 44 Messdaten, die von der Messdatenauswerteeinrichtung 46 wie im Folgenden beschrieben ausgewertet und in dem Zwischenspeicher 48 gespeichert werden. In einer Ruhebetriebsart dagegen werden Sensordaten nicht erfasst und ausgewertet. Auf die Arbeitsweise der Sensoreinrichtung 38 in diesen beiden Betriebsarten, insbesondere auch weitere Vorgänge, wird im Folgenden noch näher eingegangen.

Die Maschinensteuerung 54 ist dazu ausgebildet, in Echtzeit die Wertdokumentbearbeitungsvorrichtung 10, in diesem Ausführungsbeispiel insbesondere deren Zuführeinrichtung 14, deren Transporteinrichtung 18 und in Echtzeit und wenigstens teilweise in Abhängigkeit von den Sortiersignalen der Messdatenauswerteeinrichtung 46 zu steuern. Die Maschinensteuerung 54 ist dazu über eine Datenverbindung, in diesem Ausführungsbeispiel einen CAN-Bus, mit der Messdatenauswerteeinrichtung 46 verbunden. Die Maschinensteuerung 54 kann beispielsweise in Abhängigkeit von den Sortiersignalen der Messdatenauswerteeinrichtung 46 die Weichen 32 und 34 der Transporteinrichtung 18 so ansteuern, dass das Wertdokument einem Ausgabefach zugeführt wird, in dem die Wertdokumente mit der dem jeweiligen Wertdokument zugeordneten Klasse gesammelt werden. Auch die Maschinensteuerung 54 verfügt neben Datenschnittstellen für die genannten Datenverbindungen ebenfalls - nicht in den Figuren gezeigt - über eine Prozessor und einen mit dem Prozessor über eine Datenverbindung verbundenen Speicher, in dem eine Computerprogramm mit Programmcode gespeichert ist, bei dessen Ausführung durch den Prozessor die bereits beschriebenen bzw. im Folgenden beschriebenen Funktionen ausgeführt werden.

Die Wertdokumentbearbeitungsvorrichtung 10 ist dazu ausgebildet, in wenigstens zwei Betriebsarten bzw. Betriebsmodi betrieben zu werden, einer Sortierbetriebsart zum Sortieren von Wertdokumenten in Abhängigkeit von deren Zustand bzw. Qualität und deren Echtheit und einem Messdatenerfassungsbetriebsart zum Erfassen von Messdaten für vorgegebenen Wertdokumente. Insbesondere die oben genannten Datenverarbeitungseinrichtungen sind hierzu entsprechend ausgebildet.

In der Sortierbetriebsart werden Wertdokumente aus der Zuführeinrichtung 14 vereinzelt und an der Sensoreinrichtung 38 vorbei bzw. durch diese hindurch transportiert. Die Sensoreinrichtung 38 erfasst bzw. misst physikalische Eigenschaften des jeweils an ihr vorbei bzw. durch sie hindurch transportierten Wertdokumente und bildet Sensorsignale bzw. Messdaten, die die Messwerte für die physikalischen Eigenschaften beschreiben. Die Messdatenauswerteeinrichtung 46 klassifiziert in Abhängigkeit von den Sensorsignalen der Sensoren 40, 42 und 44 für ein Wertdokument und von in der Messdatenauswerteeinrichtung 46 gespeicherten Klassifizierungsparametern das Wertdokument in eine von vorgegebenen Echtheitsklassen und gibt ein entsprechendes Sortiersignal an die Maschinensteuerung 54 ab. Letztere steuert durch Abgabe von Stellsignalen die Transporteinrichtung 18, hier genauer die Weichen 32 bzw. 34 so an, dass das Wertdokument entsprechend seiner bei der Klassifizierung ermittelten Klasse in einen der Klasse zugeordneten Ausgabeabschnitt der Ausgabeeinrichtung 16 ausgegeben wird. Die Zuordnung zu einer der vorgegebenen Echtheitsklassen bzw. die Klassifizierung erfolgt dabei in Abhängigkeit von wenigstens einem vorgegebenen Echtheitskriterium.

Im Folgenden wird der Betrieb in der zweiten Betriebsart der Wertdokumentbearbeitungsvorrichtung, in der Messdatenerfassungsbetriebsart, genauer beschrieben. Grob skizziert werden vorgegebene Wertdokumente aus der Zuführeinrichtung 14 vereinzelt und an der Sensoreinrichtung 38 vorbei bzw. durch diese hindurch transportiert. Die Sensoreinrichtung 38 erfasst bzw. mißt physikalische Eigenschaften des jeweils an ihr vorbei bzw. durch sie hindurch transportierten Wertdokumente, wertet sie aus und führt, ähnlich der Sortierbetriebsart, der Maschinensteuerung 54 ein das Auswertungsergebnis wiedergebendes Sortiersignal zu, die dementsprechend von ihr gesteuerte Komponenten der Wertdokumentbearbeitungsvorrichtung 10 ansteuert. Weiter werden die mittels der Sensoren erfassten Messdaten, insbesondere in diesem Beispiel die Rohdaten der Sensoren, gespeichert. Genauer sind in den Speichern der drei genannten Datenverarbeitungseinrichtungen Computerprogramme mit Programmcode gespeichert, bei deren Ausführung durch die jeweiligen Prozessoren der jeweiligen Datenverarbeitungseinrichtungen folgendes Verfahren ausgeführt wird.

Zum Bereitstellen von Messdaten für einen Stapel vorgegebener Wertdokumente, im Beispiel also Banknoten, legt ein Benutzer der Stapel in die Zuführeinrichtung 14, hier das Eingabefach 20, ein. Die Wertdokumentbearbeitungsvorrichtung 10 wird dann mittels des Maschinenrechners 52 und der Ein-/ Ausgabeeinrichtung 50 in der Messdatenerfassungsbetriebsart gestartet.

Der Maschinenrechner 52 steuert die Sensoreinrichtung 38 so an, dass diese in die Messbetriebsart versetzt wird. Weiter steuert der Maschinenrechner 52 die Maschinensteuerung 54 so an, dass diese die Zuführeinrichtung 14, insbesondere den Vereinzeler 22, und die Transporteinrichtung 18 so ansteuert, dass die in der Zuführeinrichtung 14 vorhandenen Wertdokumente 12 mittels des Vereinzelers 22 vereinzelt der Transporteinrichtung 18 zugeführt werden und die Transporteinrichtung 18 die vereinzelten Wertdokumente einzeln an den Sensoren 40, 42 und 44 der Sensoreinrichtung 38 vorbei bzw. durch diese hindurch transportiert.

Es beginnt nun ein Erfassungsabschnitt des Verfahrens.

Die Sensoren 40, 42 und 44 der Sensoreinrichtung 38 erfassen nun die den Sensoren entsprechenden physikalischen Eigenschaften eines jeweils an in vorbei bzw. durch diese hindurchtransportierten Wertdokuments unter Bildung von Messdaten. Die Messdaten werden in Echtzeit an die Messdatenauswerteeinrichtung 46 übertragen, die die Messdaten in dem Zwischenspeicher 48 speichert und auswertet. In dem Zwischenspeicher 48 werden auch alle anderen bei der Auswertung oder als Ergebnis der Auswertung anfallenden Daten, im Folgenden als sonstige Betriebsdaten bezeichnet, gespeichert. Bei dem Auswerten wird dem Wertdokument eine von den vorgegebenen Klassen zugeordnet und ein Sortiersignal, das die zugeordnete Klasse bezeichnet, gebildet und an die Maschinensteuerung 54 übertragen. Die Maschinensteuerung 54 steuert dann die Transporteinrichtung 18 in Abhängigkeit von dem Sortiersignal an.

In der Messbetriebsart bzw. während der Erfassung der Messdaten überwacht die Messdatenauswerteeinrichtung 46 ein Kriterium dafür, dass die momentane Auslastung des Zwischenspeichers eine vorgegebene Grenzauslastung überschreitet. In diesem Ausführungsbeispiel überwacht sie dazu, ob die momentane Auslastung des Zwischenspeichers 48 einen vorgegebenen Grenzwert überschreitet. Der Grenzwert ist in Abhängigkeit von der Größe des maximal verfügbaren Zwischenspeichers, der Vereinzelungsgeschwindigkeit, der Länge des Transportpfades 36 bis zu den Sensoren 40, 42 und 44 und der Messdatenmenge für ein Wertdokument so gewählt, dass nach einer Unterbrechung der Vereinzelung der Wertdokumente noch genügend Zwischenspeicher zur Verfügung steht, um Messdaten für diejenigen Wertdokumente zu erfassen, die noch nach der Unterbrechung zu den Sensoren transportiert werden. Insbesondere kann der Grenzwert so ermittelt werden, dass in Abhängigkeit von der Vereinzelungsgeschwindigkeit, der Menge der Messdaten für ein Wertdokument und der maximalen Größe des Zwischenspeichers und der momentanen Speicherauslastung prognostiziert wird, nach welcher Zeitspanne der Zwischenspeicher nicht mehr zu Speicherung der Messdaten für ein weiteres Wertdokument ausreichen wird. In Abhängigkeit der Zeit für den Transport eines Wertdokuments von der Zuführeinrichtung 14, genauer dem Vereinzeler 22, zu den Sensoren und der Zeitspanne wird dann geprüft, wann die Vereinzelung unterbrochen werden muss, um ein Überlaufen des Zwischenspeichers zu vermeiden.

Wird der Grenzwert überschritten, gibt die Messdatenauswerteeinrichtung 46 ein Unterbrechungssignal an die Maschinensteuerung 54 ab, mit dem sie ein Unterbrechen der Vereinzelung anfordert.

Die Maschinensteuerung 46 steuert auf das Unterbrechungssignal hin die Zuführeinrichtung 14, genauer in diesem Beispiel den Vereinzeler 22, so an, dass die Vereinzelung unterbrochen wird.

Entlang des Abschnitts des Transportpfades 36 von der Zuführeinrichtung 14 zu den Sensoren 40, 42 und 44 sind in den Figuren nicht gezeigte Transportüberwachungssensoren angeordnet, mittels derer die Maschinensteuerung 54 überwacht, ob sich noch Wertdokumente in dem Transportpfadabschnitt befinden bzw. darin transportiert werden.

Befindet sich kein Wertdokument mehr in dem Transportpfadabschnitt, gibt die Maschinensteuerung 52 ein Signal an die Messdatenauswerteeinrichtung 46 ab, die auf dieses Signal hin zum einen die Sensoreinrichtung 38 in die Ruhebetriebsart versetzt, in der keine Messdaten erfasst und in den Zwischenspeicher geschrieben werden; zum anderen gibt sie ein Signal an den Maschinenrechner 52 ab, das den Wechsel von der Messbetriebsart und die Ruhebetriebsart anzeigt.

Damit ist der Erfassungsabschnitt des Verfahrens zunächst beendet. Es folgt ein Transferabschnitt des Verfahrens.

Auf das Signal der Messdatenauswerteeinrichtung 46 hin holt der Maschinenrechner 52 die in dem Zwischenspeicher 48 gespeicherten Messdaten und sonstige Betriebsdaten in dem Zwischenspeicher 48 ab und speichert diese in dem permanenten Speicher 56. Dabei wird der Zwischenspeicher 48 freigegeben. Sind alle Daten abgeholt, gibt die Maschinensteuerung 52 an die Messdatenauswerteeinrichtung 46 ein Fortsetzungssignal ab.

Auf dieses Fortsetzungssignal gibt die Messdatenauswerteeinrichtung 46 zum einen ein Signal an die Maschinensteuerung 54 ab. Auf dieses hin steuert die Maschinensteuerung 54 die Zuführeinrichtung 14, in diesem Ausführungsbeispiel insbesondere den Vereinzeler 22, und die Transporteinrichtung 18 so an, dass das Vereinzeln der Wertdokumente in der Zuführeinrichtung und das Transportieren der vereinzelten Wertdokumente zu den Sensoren 40, 42 und 44 fortgesetzt werden. Zum anderen versetzt die Messdatenauswerteeinrichtung 46 die Sensoreinrichtung 38 in die Messbetriebsart, so dass diese mittels der Sensoren 40, 42 und 44 wieder Messdaten für zugeführte Wertdokumente erzeugt und auswertet und in dem Zwischenspeicher 48 speichert.

Das Verfahren wird dann mit einem neuen Erfassungsabschnitt fortgesetzt. Die genannten Abschnitte werden solange in der beschriebenen Reihenfolge wiederholt, bis kein Wertdokument mehr in der Zuführeinrichtung 14 vorhanden ist oder, in anderen Ausführungsbeispielen, eine vorgegebene Anzahl von Wertdokumenten vereinzelt wurde.

Auf diese Weise werden ohne besonderes Zutun eines Benutzers Messdaten für die vorgegebenen Wertdokumente des Wertdokumentstapels gespeichert, wobei das Verfahren nur sehr geringen Zeitaufwand erfordert.

Die in dem permanenten Speicher 56 gespeicherten Messdaten können nun in der Wertdokumentbearbeitungsvorrichtung oder nach Übertragung zu einer externen Datenverarbeitungseinrichtung über eine nicht gezeigte Datenschnittstelle des Maschinenrechners zur Anpassung von Klassifizierungsparametern verwendet werden.

Ein weiteres Ausführungsbeispiel in Fig. 2 unterscheidet sich von dem ersten Ausführungsbeispiel dadurch, dass nun der permanente Speicher 56 durch einen externen Speicher 56', im Beispiel eine USB-Festplatte, ersetzt ist und stattdessen, im Beispiel in dem Maschinenrechner 52, eine Datenschnittstelle 66, im Beispiel eine USB-Schnittstelle, vorgesehen ist, über die der permanente Speicher 56 angeschlossen ist. Das Computerprogramm des Maschinenrechners ist nun so modifiziert, dass die von dem Zwischenspeicher 48 transferierten Messdaten über die Datenschnittstelle 66 in dem externen permanenten Datenspeicher gespeichert werden.

In noch anderen Ausführungsbeispielen ist die Datenschnittstelle 66 durch eine Ethernet-Schnittstelle ersetzt und der externe permanente Speicher ist ein Netzwerk-Festplattenlaufwerk (NAS - Network Array Storage).

Noch andere Ausführungsbeispiel unterscheiden sich von den zuvor beschriebenen Ausführungsbeispielen nur dadurch, dass als Kriterium dafür, dass die momentane Auslastung des Zwischenspeichers eine vorgegebene Grenzauslastung überschreitet, überwacht wird, wieviele Wertdokumente nach dem Beginn bzw. Wiederbeginn des Zuführens vereinzelt und mit den Sensoren erfasst wurden und diese Anzahl mit einer vorgegebenen Höchstanzahl verglichen wird. Diese Höchstanzahl ist analog zu der Grenzauslastung im ersten Ausführungsbeispiel festgelegt und insbesondere so gewählt, dass nach einer Vereinzelungsunterbrechung unmittelbar nach der Feststellung, dass das Kriterium erfüllt ist, genügend Speicher in dem Zwischenspeicher verblieben ist, um die gegebenenfalls noch zu erfassenden Messdaten für noch in dem Transportpfad vor den Sensoren befindliche Wertdokumente zu speichern.

## Patentansprüche

1. Verfahren zum Bereitstellen von Messdaten einer Wertdokumentbearbeitungsvorrichtung (10) zur Bearbeitung von Wertdokumenten (12), die eine Zuführvorrichtung (14) zum Zuführen einzelner Wertdokumente (12) und
eine Sensoreinrichtung (38) mit einem Zwischenspeicher (48), die einen oder mehrere Sensoren (40, 42, 44) zum Erfassen wenigstens einer physikalischen Eigenschaft von zugeführten einzelnen Wertdokumenten (12) aufweist und zum Speichern von mittels des einen Sensors bzw. der mehreren Sensoren (40, 42, 44) erzeugten Messdaten für die einzelnen Wertdokumente (12) in dem Zwischenspeicher (48) in Echtzeit ausgebildet ist, aufweist,
bei dem mittels der Zuführeinrichtung (14) einzelne Wertdokumente (12) zugeführt und in Echtzeit mittels der Sensoreinrichtung (38) für die Wertdokumente (12) Messdaten erfasst und in dem Zwischenspeicher (48) gespeichert werden, wobei während des Zuführens einzelner Wertdokumente (12) und/oder des Erfassens von Messdaten ein Kriterium dafür überwacht wird, dass die momentane Auslastung des Zwischenspeichers (48) eine vorgegebene Grenzauslastung überschreitet,
wenn das Kriterium erfüllt ist das Zuführen von Wertdokumenten (12) unterbrochen und Messdaten aus dem Zwischenspeicher (48) in einem permanenten Speicher (56) dauerhaft gespeichert werden, und
bei dem während des dauerhaften Speicherns und/oder nach dem dauerhaften Speichern der Messdaten in dem permanenten Speicher (56; 56') der Zwischenspeicher (48) wieder freigegeben wird und nach Freigabe des Zwischenspeichers (48) das Zuführen einzelner Wertdokumente (12) und das Erfassen und Speichern von Messdaten für die zugeführten Wertdokumente (12) in dem Zwischenspeicher (48) wieder aufgenommen wird.

2. Verfahren nach Anspruch 1, bei dem nach dem Unterbrechen des Zuführens und vor dem dauerhaften Speichern der Messdaten auch das Erfassen und/oder Speichern von Messdaten unterbrochen wird.

3. Verfahren nach Anspruch 2, bei dem nach dem Unterbrechen des Zuführens geprüft wird, ob sich kein einzelnes Wertdokument (12) entlang des Transportpfades (36) mehr zwischen der Zuführeinrichtung (14) und der Sensoreinrichtung (38) befindet, und das Unterbrechen des Erfassens und Speicherns der Messdaten erst erfolgt, wenn sich kein zugeführtes Wertdokument (12) mehr zwischen der Zuführeinrichtung (14) und der Sensoreinrichtung (38) befindet.

4. Verfahren nach einem der Ansprüche 1 bis 3, bei dem der permanente Speicher (56) Teil der Wertdokumentbearbeitungsvorrichtung (10) ist.

5. Verfahren nach einem der Ansprüche 1 bis 3, bei dem die Wertdokumentbearbeitungseinrichtung (10) eine Schnittstelle (64) für die Datenübertragung zu dem permanenten Speicher (56') aufweist und der permanente Speicher (56') von der Wertdokumentbearbeitungsvorrichtung (10) abgesetzt ist.

6. Vorrichtung zur Bearbeitung von Wertdokumenten (12) mit einer Zuführeinrichtung (14) zum Zuführen von einzelnen Wertdokumenten (12),
einer Aufnahmeeinrichtung (16) zur Aufnahme bearbeiteter Wertdokumente,
einer Transporteinrichtung (18) zum Transportieren von einzelnen Wertdokumenten von der Zuführeinrichtung (14) entlang eines Transportpfades (36) zu der Aufnahmeeinrichtung (16),
einer Sensoreinrichtung (38) mit einem Zwischenspeicher (48), die einen oder mehrere Sensoren (40, 42, 44) zum Erfassen jeweils wenigstens einer physikalischen Eigenschaft von zugeführten, entlang des Transportpfades (36) transportierten einzelnen Wertdokumenten (12) aufweist und zum Speichern von mittels des einen Sensors bzw. der mehreren Sensoren (40,42,44) erzeugten Messdaten für die Wertdokumente (12) in dem Zwischenspeicher (48) in Echtzeit ausgebildet ist,
wobei die Sensoreinrichtung (38) in eine Messbetriebsart, in der Messdaten für einzelne Wertdokumente (12) erfasst und in dem Zwischenspeicher (48) gespeichert werden und ein Kriterium dafür überwacht wird, dass die momentane Auslastung des Zwischenspeichers (48) eine vorgegebene Grenzauslastung überschreitet, und eine Ruhebetriebsart, in der keine Messdaten gespeichert werden, versetzbar ist,
einem permanenten Speicher (56) zum dauerhaften Speichern von Messdaten und/oder einer Schnittstelle (64) für einen externen permanenten Speicher (56') zum dauerhaften Speichern von Messdaten,
wobei die Vorrichtung (10) dazu ausgebildet ist, wenn die Sensoreinrichtung (38) in der Messbetriebsart ist, wenn das Kriterium erfüllt ist die Zuführeinrichtung (14) so anzusteuern, dass diese keine weiteren einzelnen Wertdokumente (12) zuführt, die Sensoreinrichtung (38) in die Ruhebetriebsart zu versetzen und die Messdaten aus dem Zwischenspeicher (48) in dem permanenten Speicher (56) bzw. externen permanenten Speicher (56') dauerhaft zu speichern, und während des Speicherns oder nach dem Speichern den Zwischenspeicher (48) wieder freizugeben und nach dem Freigeben des Zwischenspeichers (48) die Zuführeinrichtung (14) so anzusteuern, dass diese das Zuführen einzelner Wertdokumente (12) wiederaufnimmt, und die Sensoreinrichtung (38) in die Messbetriebsart zu versetzen.

7. Vorrichtung nach Anspruch 6, die weiter eine Maschinensteuerung (54) zur Steuerung der Zuführeinrichtung (14) und der Transporteinrichtung (18) in Echtzeit aufweist und
bei der die Sensoreinrichtung (38) eine Auswerteeinrichtung (46) umfasst, die die Messdaten auswertet und in Abhängigkeit von dem Ergebnis des Auswertens Steuersignale an die Maschinensteuerung (54) sendet, und/oder bei der die Sensoreinrichtung (38) zum Unterbrechen des Zuführens der Wertdokumente (12) mit einem Unterbrechungssignal die Maschinensteuerung (54) ansteuert, die dann die Zuführeinrichtung (14) ansteuert, so dass keine Wertdokumente (12) mehr zugeführt werden.

8. Vorrichtung nach Anspruch 7, bei der die Maschinensteuerung (54) nach Empfang des Unterbrechungssignals prüft, ob sich kein einzelnes Wertdokument (12) entlang des Transportpfades (36) zwischen der Zuführeinrichtung (14) und der Sensoreinrichtung (38) mehr befindet, und vorzugsweise, das Prüfen ergeben hat, dass sich kein einzelnes Wertdokument (12) mehr entlang des Transportpfades (36) zwischen der Zuführeinrichtung (14) und der Sensoreinrichtung (38) befindet, an die Sensoreinrichtung (38) ein Signal abgibt, auf das hin die Sensoreinrichtung (38) in die Ruhebetriebsart versetzt wird.

## Claims

1. A method for making available measuring data of a value-document processing apparatus (10) for processing value documents (12), having a feeding device (14) for feeding individual value documents (12) and
a sensor device (38) with an intermediate memory (48), having one or several sensors (40, 42, 44) for capturing at least one physical property of individual value documents (12) fed, and being configured to store in real time in the intermediate memory (48) measuring data for the individual value documents (12) produced by means of the one sensor or the several sensors (40, 42, 44),
wherein by means of the feeding device (14) individual value documents (12) are fed and, in real time, measuring data are captured for the value documents (12) by means of the sensor device (38) and stored in the intermediate memory (48), wherein during the feeding of individual value documents (12) and/or the capturing of measuring data a criterion is monitored that the current utilization of the intermediate memory (48) exceeds a predetermined limit utilization,
when the criterion is fulfilled, the feeding of value documents (12) is interrupted and measuring data from the intermediate memory (48) are permanently stored in a permanent memory (56), and
wherein, during the permanent storing and/or after the permanent storing of the measuring data in the permanent memory (56; 56'), the intermediate memory (48) is released again, and after the release of the intermediate memory (48) the feeding of individual value documents (12) and the capturing and storing in the intermediate memory (48) of measuring data for the fed value documents (12) is restarted.

2. The method according to claim 1, wherein after the interruption of the feeding and before the permanent storing of the measuring data also the capturing and/or storing of measuring data is interrupted.

3. The method according to claim 2, wherein after the interruption of the feeding it is checked whether no individual value document (12) is disposed any longer along the transport path (36) between the feeding device (14) and the sensor device (38), and the interruption of the capturing and storing of the measuring data is effected only when no fed value document (12) is disposed any longer between the feeding device (14) and the sensor device (38).

4. The method according to any of claims 1 to 3, wherein the permanent memory (56) forms part of the value-document processing apparatus (10).

5. The method according to any of claims 1 to 3, wherein the value-document processing apparatus (10) has an interface (64) for the data transmission to the permanent memory (56') and the permanent memory (56') is set off from the value-document processing apparatus (10).

6. An apparatus for processing value documents (12), with
a feeding device (14) for feeding individual value documents (12),
a receiving device (16) for receiving processed value documents,
a transport device (18) for transporting individual value documents from the feeding device (14) along a transport path (36) to the receiving device (16),
a sensor device (38) with an intermediate memory (48), having one or several sensors (40, 42, 44) for capturing respectively at least one physical property of individual value documents (12) fed and transported along the transport path (36), and being configured to store in real time in the intermediate memory (48) measuring data for the value documents (12) produced by means of the one sensor or the several sensors (40, 42, 44),
wherein the sensor device (38) can be set to a measuring mode of operation, in which measuring data for individual value documents (12) are captured and stored in the intermediate memory (48), and a criterion is monitored that the current utilization of the intermediate memory (48) exceeds a predetermined limit utilization, and can be set to a rest mode of operation in which no measuring data are stored,
a permanent memory (56) for permanently storing measuring data and/or an interface (64) for an external permanent memory (56') for permanently storing measuring data,
wherein the apparatus (10) is configured, when the sensor device (38) is in the measuring mode of operation, to so drive the feeding device (14) when the criterion is fulfilled that said feeding device does not feed any further individual value documents (12), to set the sensor device (38) to the rest mode of operation and to permanently store the measuring data from the intermediate memory (48) in the permanent memory (56) or external permanent memory (56'), and, during the storing or after the storing, to release the intermediate memory (48) again, and, after the release of the intermediate memory (48), to so drive the feeding device (14) that said feeding device restarts the feeding of individual value documents (12), and to set the sensor device (38) to the measuring mode of operation.

7. The apparatus according to claim 6, further having a machine control (54) for controlling the feeding device (14) and the transport device (18) in real time, and
wherein the sensor device (38) comprises an evaluation device (46) that evaluates the measuring data and, in dependence on the result of the evaluation, sends control signals to the machine control (54),
and/or wherein, for the purpose of interrupting the feeding of the value documents (12), the sensor device (38) drives the machine control (54) with an interruption signal, which machine control then drives the feeding device (14), so that no value documents (12) are fed any longer.

8. The apparatus according to claim 7, wherein the machine control (54) checks after receipt of the interruption signal whether no individual value document (12) is disposed any longer along the transport path (36) between the feeding device (14) and the sensor device (38), and, preferably, the check has had the result that no individual value document (12) is disposed any longer along the transport path (36) between the feeding device (14) and the sensor device (38), emits a signal to the sensor device (38) in response to which signal the sensor device (38) is set to the rest mode of operation.

## Revendications

1. Procédé de mise à disposition de données de mesure d'un dispositif de traitement de documents de valeur (10) pour le traitement de documents de valeur (12) qui comporte un dispositif d'amenée (14) pour l'amenée de documents de valeur (12) individuels et
un équipement capteur (38), doté d'une mémoire tampon (48), qui comporte un ou plusieurs capteurs (40, 42, 44) pour la saisie d'au moins une propriété physique de documents de valeur (12) individuels amenés et qui est conçu pour la mémorisation en temps réel, dans la mémoire tampon (48), de données de mesure pour les documents de valeur (12) individuels générées au moyen du un capteur ou des plusieurs capteurs (40, 42, 44),
dans lequel, au moyen du dispositif d'amenée (14), des documents de valeur (12) individuels sont amenés, et, en temps réel, au moyen de l'équipement capteur (38), pour les documents de valeur (12), des données de mesure sont saisies et mémorisées dans la mémoire tampon (48), cependant que, pendant l'amenée de documents de valeur (12) individuels et/ou pendant la saisie de données de mesure, un critère pour un dépassement d'une charge limite prédéterminée par la charge momentanée de la mémoire tampon (48) est surveillé,
quand le critère est rempli, l'amenée de documents de valeur (12) est interrompue, et des données de mesure sont mémorisées durablement dans une mémoire permanente (56) depuis la mémoire tampon (48), et
dans lequel, pendant la mémorisation durable et/ou après la mémorisation durable des données de mesure dans la mémoire permanente (56; 56'), la mémoire tampon (48) est à nouveau débloquée, et, après le déblocage de la mémoire tampon (48), l'amenée de documents de valeur (12) individuels et la saisie et la mémorisation de données de mesure pour les documents de valeur (12) amenés dans la mémoire tampon (48) est reprise.

2. Procédé selon la revendication 1, dans lequel, après l'interruption de l'amenée et avant la mémorisation durable des données de mesure, aussi la saisie et/ou la mémorisation de données de mesure est interrompue.

3. Procédé selon la revendication 2, dans lequel, après l'interruption de l'amenée, il est vérifié si plus aucun document de valeur (12) individuel ne se trouve le long du chemin de transport (36) entre l'équipement d'amenée (14) et l'équipement capteur (38), et l'interruption de la saisie et de la mémorisation des données de mesure a lieu si plus aucun document de valeur (12) amené ne se trouve entre l'équipement d'amenée (14) et l'équipement capteur (38).

4. Procédé selon une des revendications de 1 à 3, dans lequel la mémoire permanente (56) fait partie du dispositif de traitement de documents de valeur (10).

5. Procédé selon une des revendications de 1 à 3, dans lequel le dispositif de traitement de documents de valeur (10) comporte une interface (64) pour la transmission de données à la mémoire permanente (56') et la mémoire permanente (56') est déportée du dispositif de traitement de documents de valeur (10).

6. Dispositif destiné au traitement de documents de valeur (12), comprenant un équipement d'amenée (14) pour l'amenée de documents de valeur (12) individuels,
un équipement de recueil (16) pour le recueil de documents de valeur traités,
un équipement de transport (18) pour le transport de documents de valeur individuels de l'équipement d'amenée (14) le long d'un chemin de transport (36) à l'équipement de recueil (16), un équipement capteur (38), doté d'une mémoire tampon (48), qui comporte un ou plusieurs capteurs (40, 42, 44) pour la saisie de respectivement au moins une propriété physique de documents de valeur (12) individuels amenés transportés le long d'un chemin de transport (36) et qui est conçu pour la mémorisation en temps réel, dans la mémoire tampon (48), de données de mesure pour les documents de valeur (12) générées au moyen du un capteur ou des plusieurs capteurs (40, 42, 44),
cependant que l'équipement capteur (38) peut être permuté dans un mode de fonctionnement de mesure dans lequel des données de mesure pour des documents de valeur (12) individuels sont saisies et mémorisées dans la mémoire tampon (48) et un critère pour un dépassement d'une charge limite prédéterminée par la charge momentanée de la mémoire tampon (48) est surveillé, et dans un mode de fonctionnement de repos dans lequel aucunes données de mesure ne sont mémorisées,
une mémoire permanente (56) pour la mémorisation durable de données de mesure et/ou une interface (64) pour une mémoire permanente externe (56') pour la mémorisation durable de données de mesure,
cependant que le dispositif (10) est conçu pour, quand le dispositif capteur (38) est dans le mode de fonctionnement de mesure, quand le critère est rempli, commander de telle manière l'équipement d'amenée (14) que ce dernier n'amène plus d'autres documents de valeur (12) individuels, permuter l'équipement capteur (38) dans le mode de fonctionnement de repos et mémoriser durablement de données de mesure dans la mémoire permanente (56) ou dans la mémoire permanente externe (56') depuis la mémoire tampon (48), et, pendant la mémorisation ou après la mémorisation, débloquer à nouveau la mémoire tampon (48) et, après le déblocage de la mémoire tampon (48), commander de telle manière l'équipement d'amenée (14) que ce dernier reprend l'amenée de documents de valeur (12) individuels, et permuter l'équipement capteur (38) dans le mode de fonctionnement de mesure.

7. Dispositif selon la revendication 6, lequel, en outre, comporte une commande de machine (54) pour la commande en temps réel de l'équipement d'amenée (14) et de l'équipement de transport (18), et
dans lequel l'équipement capteur (38) comprend un équipement d'évaluation (46) qui évalue les données de mesure et envoie, en fonction du résultat de l'évaluation, des signaux de commande à la commande de machine (54),
et/ou dans lequel l'équipement capteur (38), pour l'interruption de l'amenée des documents de valeur (12), commande avec un signal d'interruption la commande de machine (54) qui commande alors l'équipement d'amenée (14), de telle sorte que plus aucuns documents de valeur (12) ne sont amenés.

8. Dispositif selon la revendication 7, dans lequel la commande de machine (54) vérifie après réception du signal d'interruption si plus aucun document de valeur (12) individuel ne se trouve le long du chemin de transport (36) entre l'équipement d'amenée (14) et l'équipement capteur (38), et, de préférence, si la vérification a révélé que plus aucun document de valeur (12) individuel ne se trouve le long du chemin de transport (36) entre l'équipement d'amenée (14) et l'équipement capteur (38), émet un signal à l'équipement capteur (38), à la suite duquel l'équipement capteur (38) est permuté dans le mode de fonctionnement de repos.
